## Europäisches Patentamt

**European Patent Office**

**Office européen des brevets**

(1) Publication number: **0 125 645**
**B1**

## EUROPEAN PATENT SPECIFICATION

(45) Date of publication of patent specification: **25.03.87**

(51) Int. Cl.⁴: **B 32 B 27/02,** B 32 B 27/30, B 32 B 27/12

(21) Application number: **84105323.4**

(22) Date of filing: **10.05.84**

(54) **Laminate suitable as sealing liner for liquid containers.**

(30) Priority: **17.05.83 DE 3317852**
**22.03.84 US 592382**

(43) Date of publication of application:
**21.11.84 Bulletin 84/47**

(45) Publication of the grant of the patent:
**25.03.87 Bulletin 87/13**

(84) Designated Contracting States:
**AT BE CH DE FR GB IT LI LU NL SE**

(56) References cited:
**GB-A-1 347 176**
**GB-A-1 496 197**
**US-A-3 619 315**
**US-A-3 779 840**
**US-A-3 922 418**

(73) Proprietor: **Standard Oil Company**
**200 East Randolph Drive**
**Chicago Illinois 60601 (US)**

(72) Inventor: **Alteepping, Josef**
**Lange Wiese 4**
**D-4434 Ochtrup (DE)**
Inventor: **Bornemann, Dietrich Erich**
**Feldweg 1C**
**D-4420 Coesfeld (DE)**

(74) Representative: **Spott, Gottfried, Dr. et al**
**Sendlinger-Tor-Platz 11**
**D-8000 München 2 (DE)**

## Description

This invention relates to laminates. One of the aspects of this invention relates to a product suitable for use where a water resistant coating is applied to liquid containers including, for example, water treatment plants, ponds, swimming pools, tank linings, pipe linings, etc. In a further aspect, the invention relates to a method of manufacturing these laminates and to the application of the laminates onto substrates.

Laminates have been used for such uses which comprise various forms of polyolefin sheeting alone or in combination with an anchoring or strength giving material. Often these materials are impregnated with asphalt either over the whole surface of the liner or, at least, in the joints between sheets making up the total liner. A combination suitable for such a liner is shown in US—A—4,035,543 which describes polypropylen non-woven fabric bonded to a particular polyethylene film.

From GB—A—1,496,197 it is known to form a laminate having a layer of ethylene/acrylate copolymer and bitumen which layer is thermally bonded to a consolidated non-woven fabric. Between the two layers at least one layer of reinforcement is incorporated.

It is an object of this invention to provide a simple laminate resistant to water and physical stress for service in contact with drinking-water in application to substrates such as concrete, steel, ceramic, and wood. A further object of this invention is to provide a method for manufacturing such laminates and the application of the laminates to the substrates named. The substrate is then permanently protected from corrosion caused by water.

Other objects of the invention will be apparent to those skilled in the art upon reading this description.

Broadly, our invention resides in a method of making a liner for a liquid container comprising heating a polyolefin fabric having a weight of 100 to 300 grams per square meter at a temperature of 110° to 160°C for a time of 30 to 120 seconds, extruding onto said fabric an ethylene/butylacrylate copolymer containing 15 to 25 weight percent butylacrylate in an amount of 600 to 1200 grams per square meter, and forcing the polymer into the interstices of the fabric.

In another aspect, our invention resides in a liner for a liquid container comprising a laminate comprising a layer of ethylene/butylacrylate copolymer in an amount of 600 to 1200 grams per square meter thermally bonded to a heat set non-woven polyolefin fabric having a weight of 100 to 300 grams per square meter, said ethylene/butylacrylate copolymer containing 15 to 25 percent butylacrylate on a weight basis.

Still further, the invention resides in a method of lining a pond or pool by applying the liner to the substrate by means of an adhesive such as an epoxy resin. This is possible since the extrusion laminating one side of the non-woven to the polymer maintains the original structure of the non-woven to provide the adhesive bridge.

The basic material for the production of such laminates is a non-woven polyolefin fabric generally produced by needle punching carded fibers of a polyolefin, preferably polypropylene staple yarn. Such non-woven fabrics are available from a number of sources and have a weight range of 100 to 300 grams per square meter. Fabrics having a weight of approximately 150 grams per square meter have been found to be particularly suitable.

To provide dimensional and thermal stability, the non-woven fabric is heat-set prior to use. The temperature and time of heat-set depend upon the particular polyolefin fabric used, but this can be easily determined by a few trials. For polypropylene fabric, a temperature of 110°C to 160°C for a time of 30 to 120 seconds is suitable.

The thermoplastic coating resin which we use is an ethylene/butylacrylate copolymer having a relatively high butylacrylate content, i.e., 15 to 25 weight percent butylacrylate. This polymer works well in the process and provides good resistance to stress, abrasion, weather, water and to microorganisms. Furthermore, no plasticizer is used in the resin, an additive which is detrimental upon prolonged exposure to the elements. For instance, the abrasion resistance is approximately 20 times higher than polyvinylchloride, a resin which has been proposed for this use.

The laminate is prepared by extruding the copolymer on the heat-set, non-woven fabric. Temperatures will depend, to some extent, upon the particular polymer, but the temperature should be in the range of 240° to 280°C. For good results, 600 to 1200 grams should be applied per square meter of the non-woven fabric. This will produce a copolymer layer in the range of 0.5 to 1.5 millimeters thick. After copolymer application, the resin fabric laminate is passed between rollers in a roll mill, this forcing molten polymer into the interstices of one side of the non-woven fabric.

In use, the laminate is applied to substrate, such as concrete, wood, metal, etc., by means of suitable adhesive such as epoxy resin. Such resins are commercially available and the adhesive generally comprises the epoxy resin in combination with a curing agent such as an amine.

The exact composition of the copolymer is subject to variation and various additives can be added thereto, such additives including pigments, stabilizers, and the like.

In application of the laminate to a substrate, joints between adjacent sections of the laminate can be bonded to be watertight either by hot melt sealing or by heat bonding of the overlapping layer.

The following example illustrates a specific embodiment of the invention but it should not be considered unduly limiting.

## Example

A non-woven polypropylene fabric was heat-set by heating at 140°C for one minute to render it dimensionally and thermally stable. The fabric used was Propex Style No. 4545, a commercial product of Amoco Fabrics Company, having a weight of 150 grams per square meter and a thickness of one-half millimeter. An ethylene/butylacrylate copolymer containing 17 percent by weight butylacrylate having a melt flow rate of 7 g/10 min at 230°C using a weight of 2,160 grams (Unifos Kemi AB Dex 922) was extrusion coated onto the fabric at a temperature of approximately 270°C and the laminate passed into the nip of a roll mill. The copolymer coating was applied in an amount of 850 grams per square meter resulting in a resin layer about one millimeter thick. The resulting coated fabric was 1.2 millimeters thick.

This fabric was used to form a lining on the walls and bottom of a swimming pool. Attachment of the coated fabric was by means of an epoxy resin adhesive applied between the uncoated side of the fabric and the concrete sides and bottom of the pool. Joints were overlapped and heat sealed. Resistance to abrasion, puncture, water, and microorganisms was excellent.

Those skilled in the art will recognize that reasonable variation and modification are possible within the scope of our invention.

## Claims

1. A liner for a liquid container comprising a laminate comprising a first layer containing an ethylene/acrylate copolymer thermally bonded to a second layer comprising a non-woven polyolefin fabric, characterized in that the first layer is a layer of ethylene/butylacrylate copolymer having a weight of 600 to 1200 grams per square meter, said ethylene/butylacrylate copolymer containing 15 to 25 percent butylacrylate on a weight basis and the second layer is a heat-set, non-woven polyolefin fabric having a weight of 100 to 300 grams per square meter.

2. The liner of Claim 1 wherein said non-woven fabric is made from polypropylene staple fibers.

3. The liner of Claim 2 wherein said copolymer contains approximately 17 percent butylacrylate applied in an amount of 850 grams per square meter and said fabric has a weight of approximately 150 grams per square meter.

4. A method of making a liner for a liquid container comprising heating a polyolefin non-woven fabric having a weight of 100 to 300 grams per square meter at a temperature of 110° to 160°C for a time of 30 to 120 seconds, extruding onto said fabric an ethylene/butylacrylate copolymer containing 15 to 25 weight percent butylacrylate in an amount of 600 to 1200 grams per square meter, and forcing the polymer into the interstices of the fabric.

5. The method of Claim 4 wherein said polyolefin is polypropylene.

6. The method of Claim 5 wherein said fabric has a weight of approximately 150 grams per square meter and wherein said copolymer contains approximately 17 weight percent butylacrylate and is applied in an amount of approximately 850 grams per square meter.

7. The method of lining a pond or pool comprising applying the liner of Claim 1 to a substrate by means of water resistant resinadhesive.

8. The method of Claim 7 wherein the adhesive is an epoxy resin.

## Patentansprüche

1. Auskleidung für einen Flüssigkeitsbehälter in Form eines Laminats aus einer ersten Schicht aus einem Ethylen-Acrylat-Copolymeren und einer damit durch thermische Bindung verbundenen zweiten Schicht aus einem Vlies aus Polyolefinfasern, dadurch gekennzeichnet, daß die erste Schicht eine Schicht aus einem Ethylen-Butylacrylat-Copolymeren mit einem Flächengewicht von 600 bis 1.200 g/m² ist, wobei das Ethylen-Butylacrylat-Copolymere 15 bis 25 Gewichtsprozent Butylacrylat enthält, und daß die zweite Schicht ein hitzegehärtetes Vlies aus Polyolefinfasern mit einem Flächengewicht von 100 bis 300 g/m² ist.

2. Auskleidung nach Anspruch 1, dadurch gekennzeichnet, daß die Vliesschicht aus Polypropylenstapelfasern hergestellt ist.

3. Auskleidung nach Anspruch 2, dadurch gekennzeichnet, daß das Copolymere etwa 17 Gewichtsprozent Butylacrylat angewandt in einer Menge von 850 g/m² enthält und die Vliesschicht ein Flächengewicht von etwa 150 g/m² aufweist.

4. Verfahren zur Herstellung einer Auskleidung für einen Flüssigkeitsbehälter, dadurch gekennzeichnet, daß man eine Vliesschicht aus Polyolefinfasern, die ein Flächengewicht von 100 bis 300 g/m² hat, bei einer Temperatur von 110 bis 160°C während einer Zeitdauer von 30 bis 120 Sekunden erhitzt, auf diese Vliesschicht ein Ethylen-Butylacrylat-Copolymeres, das 15 bis 25 Gewichtsprozent Butylacrylat enthält, in einer Menge von 600 bis 1200 g/m² extrudiert und das Polymere in die Zwischenräume der Vliesschicht preßt.

5. Verfahren nach Anspruch 4, dadurch gekennzeichnet, daß das Polyolefin Polypropylen ist.

6. Verfahren nach Anspruch 5, dadurch gekennzeichnet, daß die Vliesschicht ein Flächengewicht von etwa 150 g/m² hat und das Copolymere etwa 17 Gewichtsprozent Butylacrylat enthält und mit einem Flächengewicht von etwa 850 g/m² angewandt wird.

7. Verfahren zur Auskleidung eines Wasserbehälters oder eines Schwimmbeckens, dadurch gekennzeichnet, daß man die Auskleidung nach Anspruch 1 mittels eines wasserbeständigen Klebstoffes auf Harzbasis auf den jeweiligen Träger aufbringt.

8. Verfahren nach Anspruch 7, dadurch gekennzeichnet, daß der Klebstoff ein Klebstoff auf Basis eines Epoxyharzes ist.

**Revendications**

1. Revêtement pour un récipient pour liquides sous la forme d'un laminé comprenant une première couche de copolymère d'éthylène et d'acrylate et une deuxième couche en nontissé de fibres de polyoléfines liée par fixation thermique à la première couche, caractérisé en ce que la première couche est une couche d'un copolymère d'éthylène et d'acrylate de butyle ayant une masse superficielle de 600 à 1200 g/m², le copolymère d'éthylène et d'acrylate de butyle contenant de 15 à 20% en poids d'acrylate de butyle, et la deuxième couche est un nontissé thermodurcissable de fibres de polyoléfines d'une masse superficielle de 100 à 300 g/m².

2. Revêtement selon la revendication 1, caractérisé en ce que la couche de nontissé est fabriquée en fibres coupées de polypropylène.

3. Revêtement selon la revendication 2, caractérisé en ce que le copolymère contient environ 17% en poids d'acrylate de butyle utilisé dans une quantité de 850 g/m² et la couche de nontissés présente une masse superficielle d'environ 150 g/m².

4. Procédé pour la fabrication d'un revêtement pour un récipient pour liquides, caractérisé en ce qu'on chauffe une couche de nontissé en fibres de polyoléfines ayant une masse superficielle de 100 à 300 g/m², à une température de 110 à 160°C pendant une période de 30 à 120 secondes, on extrude sur cette couche de nontissé dans une quantité de 600 à 1200 g/m² un copolymère d'éthylène et d'acrylate de butyle contenant de 15 à 25% en poids d'acrylate de butyle, puis on presse le polymère dans les interstices de la couche de notissé.

5. Procédé selon la revendication 4, caractérisé en ce que la polyoléfine est du polypropylène.

6. Procédé selon la revendication 5, caractérisé en ce la couche de nontissé a une masse superficielle d'environ 150 g/m² et le copolymère contient environ 17% en poids d'acrylate de butyle et est utilisé dans une quantité d'environ 850 g au m².

7. Procédé pour revêtir un récipient pour l'eau ou une piscine, caractérisé en ce qu'on applique sur un support correspondant le revêtement selon la revendication 1 au moyen d'un adhésif résistant à l'eau à base de résine.

8. Procédé selon la revendication 7, caractérisé en ce que l'adhésif est un adhésif à base d'une résine époxy.